# EUROPÄISCHE PATENTSCHRIFT

(11) **EP 0 497 173 B1**
(45) Veröffentlichungstag und Bekanntmachung des Hinweises auf die Patenterteilung: **02.08.1995**
(21) Anmeldenummer: 92100824.9
(22) Anmeldetag: 20.01.1992
(51) Int. Cl.: C08F 8/32, C08F 8/30, C08F 210/02

(54) **Verfahren zur Herstellung von Nitrilgruppen enthaltenden Copolymerisaten auf Basis von ethylenisch ungesättigten Monomeren**
Process for the manufacture of copolymers of ethylenically insaturated monomers, containing nitrilic groups
Procédé de préparation de copolymères contenant des groupements nitriles à base de monomères à insaturation éthylénique

(30) Priorität: 01.02.1991 DE 4102998
(43) Veröffentlichungstag der Anmeldung: 05.08.1992
(73) Patentinhaber: BAYER AG, 51368 Leverkusen (DE)
(72) Erfinder: Schrage, Heinrich, Dr., 47800 Krefeld (DE); Buysch, Hans-Josef, Dr., 47809 Krefeld (DE); Vernaleken, Hugo, Dr, 47800 Krefeld (DE); Buback, Michael, Prof. Dr., 37120 Bovenden (DE); Rohde, Stefan, 37083 Göttingen (DE); Rindfleisch, Frank,, 37081 Göttingen (DE)

(56) Entgegenhaltungen:
- EP-A- 0 381 973
- HOUBEN-WEYL METHODEN DER ORGANISCHEN CHEMIE Bd. 8, 1952, STUTTGART P. KURTZ: 'METHODEN ZUR HERSTELLUNG UND UMWANDLUNG VON NITRILEN UND ISONITRILEN'

## Beschreibung

Die vorliegende Erfindung betrifft ein Verfahren zur Herstellung von Nitrilgruppen enthaltenden Copolymerisaten auf Basis von ethylenisch ungesättigten Monomeren.

Aus EP 0 381 973 ist ein Verfahren zur Herstellung von Nitrilgruppen enthaltenden Copolymerisaten auf Basis von Ethylen bekannt, das dadurch gekennzeichnet ist, daß man ein Basis-Copolymerisat aus überwiegenden Anteilen Ethylen und untergeordneten Anteilen eines α,β-ungesättigten Carbonsäureesters bei 120 bis 280°C und 150 bis 2500 bar mit Ammoniak umsetzt.

Nachteilig an diesem Verfahren sind jedoch die langen Reaktionszeiten und hohen Drücke, die für eine technisch akzeptable Umwandlung in das entsprechende Nitril erforderlich sind. So wird beispielsweise im Beispiel der Europäischen Patentschrift bei Drücken von 1500 bar gearbeitet.

Es wurde nun ein Verfahren zur Herstellung von Nitrilgruppen enthaltenden Copolymerisaten auf Basis von ethylenisch ungesättigten Monomeren, die aus
a) überwiegenden Anteilen der Struktureinheiten der ethylenisch ungesättigten Monomeren,
b) untergeordneten Anteilen der Struktureinheiten der allgemeinen Formel 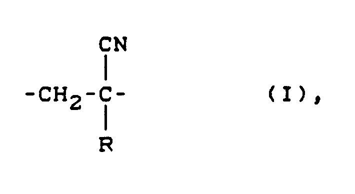 in der
   - R: Wasserstoff oder eine C₁-C₄-Alkylgruppe bedeutet,
sowie
c) gewünschtenfalls aus Struktureinheiten, welche sich von weiteren Comonomeren ableiten, aufgebaut sind, gefunden, das dadurch gekennzeichnet ist, daß man ein Basis-Copolymerisat aus überwiegenden Anteilen an ethylenisch ungesättigten Monomeren, untergeordneten Anteilen eines α,β-ungesättigten Carbonsäureesters der allgemeinen Formel 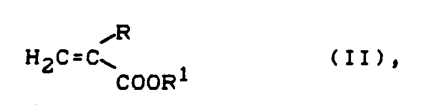 in der
   - R¹: für eine C₁-C₈-Alkylgruppe steht,
   sowie gewünschtenfalls weiteren Comonomeren bei Temperaturen von 150 bis 270°C und Drücken von 30 bis 350 bar mit Ammoniak in Gegenwart eines aliphatischen Nitrils und/oder Dinitrils umsetzt,

Bevorzugt wird die Umsetzung bei Temperaturen von 180 bis 250°C und Drücken von 50 bis 150 bar durchgeführt.

Der Anteil der ethylenisch ungesättigten Monomeren in den erfindungsgemäßen Copolymerisaten beträgt vorzugsweise 55 bis 95 Mol-%, derjenigen der Einheiten (I) 5 bis 40 Mol-% und derjenige der Einheiten der sonstigen Comonomeren bis zu 40, insbesondere bis zu 20 Mol-%. Besonders bevorzugt sind Copolymerisate mit 70 bis 85 Mol-% ethylenisch ungesättigten Monomeren und 10 bis 25 Mol-% der Einheiten (I). Entsprechend diesen Molverhältnissen geht man bei dem erfindungsgemäßen Verfahren von Basis-Copolymeren analoger Zusammensetzung aus.

Als ethylenisch ungesättigte Monomere werden bevorzugt Ethylen und Styrol genannt.

Die einzusetzenden Copolymere sind bekannt oder können auf bekannte Weise durch radikalische Polymerisation in praktisch jedem gewünschten Polymerisationsgrad erhalten werden. Bevorzugt ist ein Polymerisationsgrad mit mittleren Molmassen von 20.000 bis 250.000.

Als ungesättigte Carbonsäureester der allgemeinen Formel (II) kommen beispielsweise die Ester der Acrylsäure und der Methacrylsäure in Betracht. Genannt werden insbesondere die Methylester, die Ethylester, die Propyl- und Butylester.

Als weitere Comonomere, aus denen die erfindungsgemäßen Copolymerisate aufgebaut sein können, kommen beispielsweise höhere Olefine, wie Buten, Penten und Hexen, ungesättigte Alkohole, wie Allylalkohol, und bifunktionelle Monomere, wie Butadien und Isopren, in Betracht.

Das erfindungsgemäße Verfahren kann auch so gesteuert werden, daß die Umsetzung nicht vollständig durchgeführt wird. Erhalten werden dabei solche Copolymerisate die noch eine Amidfunktion oder die ursprüngliche Estergruppierung enthalten.

Die Menge des eingesetzten Ammoniaks hängt beim erfindungsgemäßen Verfahren vom gewünschten Umsetzungsgrad des Esters ab und ist daher mindestens äquimolar zur Anzahl der umgesetzten Gruppierungen. Da im allgemeinen ein vollständiger Umsatz angestrebt wird, empfiehlt es sich zur Beschleunigung der Reaktion, das Ammoniak in bis zu 50-fachem Überschuß einzusetzen. Bevorzugt wird mit einem 2 bis 10-fachen Ammoniaküberschuß, bezogen auf umzusetzende Ester, gearbeitet.

Die dem erfindungsgemäßen Verfahren zuzusetzenden Nitrile sind insbesondere niedermolekulare aliphatische Nitrile und/oder Dinitrile, wie Acetonitril, Propionitril, Valeronitril, Buttersäurenitril und/oder Bernsteinsäuredinitril, bevorzugt Acetonitril.

Die Menge des eingesetzten Nitrils sollte mindestens äquimolar zur Anzahl der Estergruppierungen sein. Im allgemeinen wird jedoch mit einem 5- bis 50-fachen Überschuß gearbeitet, da das Nitril gleichzeitig als Lösungsmittel für das Polymer fungiert und damit die Reaktionsführung vereinfacht. Nach beendeter Reaktion kann der Überschuß leicht wiedergewonnen werden.

Um die Viskosität der Reaktionsmischung noch weiter herabzusetzen, können noch zusätzlich inerte Lösungsmittel, wie Toluol, Tetrahydrofuran und/oder Dioxan verwendet werden.

Sollte der Umsatz des Estergruppen enthaltenden Polymeren zum entsprechenden Nitril nicht ausreichend sein, kann er durch Einsatz wasserabspaltender Reagenzien vervollständigt werden. Dazu wird die Reaktionslösung des Polymers nach Ablassen des überschüssigen Ammoniaks mit einem wasserabspaltenden Reagenz drucklos, gegebenenfalls in Gegenwart eines Lösungsmittels umgesetzt.

Als wasserabspaltende Reagenzien eignen sich beispielsweise Thionylchlorid, Phosgen, Oxalylchlorid und/oder Phosphortrichlorid, bevorzugt Phosgen.

Die wasserabspaltenden Reagenzien werden im allgemeinen in einem 2- bis 10-fachen molaren Überschuß, bezogen auf noch vorhandene Carbonamidgruppen eingesetzt. Bevorzugt wird ein 3- bis 5-facher Überschuß. Das überschüssige Reagenz kann nach beendeter Reaktion durch Destillation wiedergewonnen werden und für weitere Umsetzungen verwendet werden.

Die Reaktion wird im allgemeinen so durchgeführt, daß eine Lösung oder Suspension des Polymers bei erhöhter Temperatur mit dem wasserabspaltenden Reagenz, gegebenenfalls in Gegenwart eines Katalysators, umgesetzt wird.

Als Katalysatoren eignen sich Dimethylformamid, Dimethylacetamid und/oder Triphenylphosphin(oxid). Die Konzentration des Katalysators beträgt üblicherweise 0,01 bis 5 Gew.-%, bezogen auf das wasserabspaltende Reagenz.

Als geeignete Lösungsmittel bei der Wasserabspaltung dienen solche, die einerseits ein ausreichendes Lösungsvermögen für das eingesetzte Polymer besitzen und andererseits unter den gewählten Reaktionsbedingungen nicht mit dem wasserabspaltenden Reagenz reagieren. Genannt werden beispielsweise Acetonitril, Chlorbenzol, Nitrobenzol und/oder Benzonitril.

Bei der Nachreaktion beträgt die Konzentration des Polymers, bezogen auf das eingesetzte Lösungsmittel, in der Regel 3 bis 25 Gew.-%, bevorzugt 5 bis 20 Gew.-%. Die Reaktion kann auch mit dem ungelösten Polymer, beispielsweise in einem Kneter durchgeführt werden.

Die Reaktionszeiten bei der Nachreaktion liegen bei etwa 2 bis 16 Stunden; die Reaktionstemperaturen betragen 20 bis 180°C, bevorzugt 40 bis 120°C.

Die erfindungsgemäßen Nitrilgruppen enthaltenden Copolymerisate dienen zur Herstellung von Formkörpern und Folien.

### Beispiel

3 g eines statistischen Copolymers aus Ethylen und Acrylsäuremethylester (molares Verhältnis 2,5:1) der mittleren Molmasse 240.000 wurden in einem Gemisch aus 15 ml THF/Acetonitril (1:2) gelöst und mit 1,3 g Ammoniak bei 240°C 18 h lang in einem Autoklaven bei 140 bar umgesetzt. Die IR-Analyse des Produkts zeigte neben der Nitrilbande bei 2236 cm⁻¹ einen vollständigen Umsatz des Esters an. Die elementaranalytisch bestimmten Stickstoff- und Sauerstoffwerte des Polymers ergaben, daß sich 50 % Nitrilgruppen und 50 % Amidgruppen im Polymeren gebildet hatten.

Durch Umsetzung der Reaktionslösung mit Phosgen konnte die vollständige Umwandlung des noch vorhandenen Amids in das Nitril erreicht werden.

Dazu wurde die Lösung des erhaltenen Copolymers unter Zusatz von 30 ml Chlorbenzol bei 70°C in Gegenwart von 0,1 g Triphenylphosphin(oxid) mit 2 g Phosgen 4 h lang umgesetzt. Das erhaltene Reaktionsprodukt konnte beispielsweise durch Einrühren der Reaktionslösung in Methanol gefällt werden. Es wurde, wie erwähnt, eine vollständige Umsetzung zum entsprechenden Nitril erzielt.

### Vergleichsbeispiel (ohne Zusatz eines Nitrils [Acetonitril])

Das im obigen Beispiel eingesetzte Copolymer wurde in 15 ml THF gelöst und mit 1,3 g Ammoniak bei 240°C 18 Stunden lang in einem Autoklaven bei 140 bar umgesetzt. Die IR-Analyse des Produktes zeigte keine Banden im Bereich der Nitriladsorption [zwischen 2230 - 2240 cm⁻¹].

## Patentansprüche

1. Verfahren zur Herstellung von Nitrilgruppen enthaltenden Copolymerisaten auf Basis von ethylenisch ungesättigten Monomeren, die aus
a) überwiegenden Anteilen der Struktureinheiten der ethylenisch ungesättigten Monomeren,
b) untergeordneten Anteilen der Struktureinheiten der allgemeinen Formel 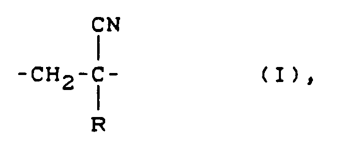 in der
R Wasserstoff oder eine C₁-C₄-Alkylgruppe bedeutet,
sowie
c) gewünschtenfalls aus Struktureinheiten, welche sich von weiteren Comonomeren ableiten, aufgebaut sind, dadurch gekennzeichnet, daß man ein Basis-Copolymerisat aus überwiegenden Anteilen an ethylenisch ungesättigten Monomeren, untergeordneten Anteilen eines α,β-ungesättigten Carbonsäureesters der allgemeinen Formel 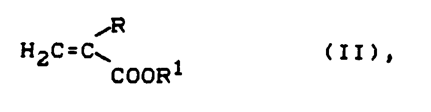 in der
R¹ für eine C₁-C₈-Alkylgruppe steht,
sowie gewünschtenfalls weiteren Comonomeren bei Temperaturen von 150 bis 270°C und Drücken von 30 bis 350 bar mit Ammoniak in Gegenwart eines aliphatischen Nitrils und/oder Dinitrils umsetzt.

2. Verfahren nach Anspruch 1, dadurch gekennzeichnet, daß man zur Vervollständigung der Umsetzung (vollständige Umwandlung der Estergruppen in Nitrilgruppen) das zunächst erhaltene Copolymerisat mit wasserabspaltenden Reagenzien gegebenenfalls in Gegenwart eines Katalysators und in Gegenwart von Lösungsmitteln behandelt.

3. Verfahren nach Ansprüchen 1 und 2, dadurch gekennzeichnet, daß man die Nachbehandlung drucklos bei 20 bis 180°C durchführt.

## Claims

1. Process for the preparation of copolymers based on ethylenically unsaturated monomers and Containing nitrile groups, which copolymers are built up of
a) predominant proportions of structural units of ethylenically unsaturated monomers,
b) minor proportions of structural units corresponding to the general formula 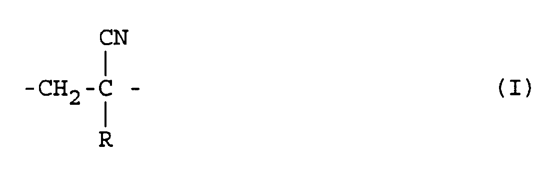 wherein
R signifies hydrogen or a C₁-C₄ alkyl group
and
c) if desired, structural units derived from other comonomers, characterised in that a copolymer used as a basis and made from predominant proportions of ethylenically unsaturated monomers, minor proportions of an α,β-unsaturated carboxylic ester corresponding to the general formula 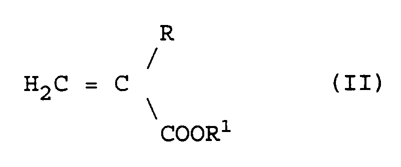 wherein
R¹ represents a C₁-C₈ alkyl group,
and, if desired, other comonomers, is reacted at temperatures of from 150 to 270°C and pressures of from 30 to 350 bar with ammonia in the presence of an aliphatic nitrile and/or dinitrile.

2. Process according to claim 1, characterised in that to complete the reaction (complete conversion of the ester groups into nitrile groups), the copolymer initially obtained is treated with dehydrating agents, optionally in the presence of a catalyst and in the presence of solvents.

3. Process according to claims 1 and 2, characterised in that the after-treatment is carried out at from 20 to 180°C without the use of pressure.

## Revendications

1. Procédé de préparation de copolymères contenant des groupes nitriles à base de monomères à insaturation éthylénique, ces copolymères étant constitués de :
a) des proportions prépondérantes de motifs de structure des monomères à insaturation éthylénique,
b) des proportions mineures de motifs de structure de formule générale 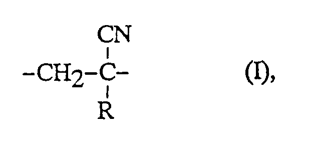
dans laquelle
R représente l'hydrogène ou un groupe alkyle en C₁-C₄,
et
c) si on le désire, des motifs de structure dérivant d'autres comonomères,
ce procédé se caractérisant en ce que l'on fait réagir avec l'ammoniac à des températures de 150 à 270°C et des pressions de 30 à 350 bar, en présence d'un nitrile et/ou dinitrile aliphatique, un copolymère de base consistant en proportions prépondérantes de monomères à insaturation éthylénique, en proportions mineures d'un ester d'acide carboxylique α,β-insaturé de formule générale : 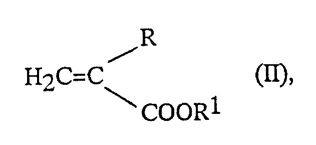 dans laquelle
R¹ représente un groupe alkyle en C₁-C₈,
et si on le désire d'autres co-monomères.

2. Procédé selon la revendication 1, caractérisé en ce que pour compléter la réaction (conversion complète des groupes esters en groupes nitriles) on traite le copolymère obtenu en premier par des réactifs déshydratants éventuellement en présence de catalyseurs et en présence de solvants.

3. Procédé selon les revendications 1 et 2, caractérisé en ce que le traitement complémentaire est réalisé à pression normale à des températures de 20 à 80°C.
